# EUROPÄISCHE PATENTSCHRIFT

(11) **EP 0 585 623 B1**
(45) Veröffentlichungstag und Bekanntmachung des Hinweises auf die Patenterteilung: **27.12.1996**
(21) Anmeldenummer: 93112318.6
(22) Anmeldetag: 31.07.1993
(51) Int. Cl.: G01H 1/00

(54) **Verfahren zur Früherkennung eines Risses in einer rotierenden Welle**
Method for early detection of cracks in a rotating shaft
Procédé de détection précoce des fissures dans un arbre rotatif

(30) Priorität: 04.09.1992 DE 4229340
(43) Veröffentlichungstag der Anmeldung: 09.03.1994
(73) Patentinhaber: CARL SCHENCK AG, D-64293 Darmstadt (DE)
(72) Erfinder: Gasch, Robert, Prof.Dr.Ing., D-12161 Berlin (DE); Liao, Mingfu, Xian 71002 (CN)
(74) Vertreter: Brandt, Ernst-Ulrich, Dipl.-Phys., Dipl.-Ing.

(56) Entgegenhaltungen:
- US-A- 4 464 935

## Beschreibung

Die Erfindung betrifft ein Verfahren zur Früherkennung eines Risses in einer rotierenden Welle, insbesondere in einer Welle eines Turbosatzes eines Kraftwerks, bei dem kontinuierlich oder in Zeitabständen mit Hilfe von Schwingungsaufnehmern in wenigstens zwei radialen, vorzugsweise zueinander senkrechten Richtungen die Biegeschwingungen der Welle darstellende Signale drehwinkelbezogen aufgenommen und an eine Signalverarbeitung übertragen werden, die aus den Signalen die harmonischen Schwingungsanteile mit einfacher und/oder doppelter und/oder dreifacher Umlauffrequenz ermittelt und durch vektorielle Zusammensetzung dieser Schwingungsanteile umlauffrequente und/oder doppelt umlauffrequente und/oder dreifach umlauffrequente Schwingungsfiguren bildet.

Die frühzeitige Erkennung eines Wellenrisses ist vor allem bei großen Maschinen, wie sie in Kraftwerken eingesetzt werden, von großer Bedeutung, um Maschinenschäden und daraus resultierende Kosten und Risiken zu vermeiden. Da die Maschinen oftmals über lange Zeiträume ununterbrochen in Betrieb sind und ein zwischenzeitliches Stillsetzen aus Kostengründen nicht vertretbar ist, sind bereits Verfahren entwickelt worden, bei denen durch ständige Beobachtung und Analyse der Biegeschwingungen der Welle versucht wird, aus bestimmten Schwingungsänderungen auf das Vorhandensein eines Risses in der Welle zu schließen. So ist aus der US-PS 4,380,172 ein Verfahren zur Ermittlung von Rissen in einem Turbinenrotor bekannt, bei dem während des Betriebs der Turbine unter Last und bei im wesentlichen normaler Betriebsdrehzahl die Schwingungen des Rotors aufgenommen und ausgewertet werden. Hierzu sind an den Lagern in Umfangsrichtung um 90° gegeneinander versetzt Schwingungssensoren angeordnet, die als Weg- oder Beschleunigungsaufnehmer ausgebildet sein können. Die Schwingungssignale werden zunächst beim Normalzustand der Turbine aufgenommen, aufbereitet und durch Signalanalyse der harmonische Anteil der Schwingungssignale bestimmt, wobei die Schwingungsanteile mit einfacher, doppelter und dreifacher Drehfrequenz erfaßt werden. Um durch Auswertung dieser Schwingungsanteile möglichst frühzeitig einen Riß erkennen zu können, wird die Temperatur des Turbinenrotors, beispielsweise durch eine entsprechende Steuerung der Dampftemperatur geändert, wodurch vorübergehend thermische Spannungen im Rotor hervorgerufen werden, die das rißbedingte Schwingungsverhalten des Rotors beeinflussen. Durch Vergleich der vor und nach der Temperaturänderung aufgenommenen und analysierten Schwingungssignale und vor allem durch Beobachtung der Änderung ihrer zweifach drehfrequenten Anteile wird das Vorhandensein eines Risses ermittelt. Das bekannte Verfahren hat sich jedoch als nicht genügend aussagekräftig erwiesen, da Unwucht, Ausrichtfehler, Lagerschäden und zahlreiche andere Einflüsse Schwingungsbilder hervorrufen können, die den von einem Riß erwarteten Schwingungsbildern ähnlich sind. In Felduntersuchungen wurde festgestellt, daß durch gemeinsames Auftreten verschiedener Störungen die Anzeichen eines Risses verdeckt werden können. Auch wurde beobachtet, daß zweipolige Generatoren zweifach drehfrequente Schwingungen in Verbindung mit drehfrequenten Variationen erregen, ohne daß ein Riß vorliegt.

Um Schwingungsmerkmale eines Wellenrisses von solchen anderer Funktionsstörungen, welche ein ähnliches Schwingungsverhalten hervorrufen, zu unterscheiden, ist es bekannt, aus den aufgenommenen Signalen die kinetische Wellenbahn oder Wellenschwingungsfigur zu bilden und in einem Polardiagramm darzustellen und auszuwerten. Ebenso ist es bekannt, die Bildung von Schwingungsfiguren des herausgefilterten Schwingungsanteils mit doppelter Drehfrequenz darzustellen und auszuwerten. Die Auswertung der Schwingungsfiguren erfordert aber eine Reihe weiterer Analysen und ist daher sehr kompliziert und aufwendig. Eine Zerlegung in Gleich- und Gegenlaufkomponenten ist nicht vorgesehen.

Der Erfindung liegt die Aufgabe zugrunde, ein Verfahren der eingangs genannten Art zur Früherkennung eines Risses in einer rotierenden Welle anzugeben, das durch Analyse von während des Betriebs aufgenommenen Schwingungen eine deutliche Unterscheidung der durch einen Riß erregten Schwingungen von durch andere Ursachen hervorgerufenen Schwingungen ermöglicht.

Erfindungsgemäß wird diese Aufgabe bei einem Verfahren der eingangs gennanten Art dadurch gelöst, daß die umlauffrequenten und/oder doppelt umlauffrequenten und/oder dreifach umlauffrequenten aus den harmonischen Schwingungsanteilen gebildeten Schwingungsfiguren von der Signalverarbeitung vektoriell in eine in der Wellendrehrichtung umlaufende Gleichlaufkomponente und eine entgegen der Wellendrehrichtung umlaufende Gegenlaufkomponente zerlegt werden und daß die Gegenlaufkomponente mit einer entsprechenden, im Neu- oder Normalzustand ermittelten Referenzgröße verglichen wird.

Das erfindungsgemäße Verfahren beruht auf der Erkenntnis, daß sich in den ermittelten Schwingungsfiguren die Bahnen gleich- und gegenläufiger Vektoren überlagern, die von den schwingungserregenden Ereignissen unterschiedlich beeinflußt werden. Hierbei hat sich überraschenderweise gezeigt, daß ein Wellenriß neben den gleichläufigen umlauffrequenten, doppel- und dreifach-umlauffrequenten Schwingungen vor allem die gegenläufig umlauffrequente Schwingung sehr stark anregt, die durch andere Störgrößen (Unwucht, ungleiche Wellensteifigkeit) kaum beeinflußt wird. Durch Beobachtung und Vergleich der umlauffrequenten, doppelt umlauffrequenten oder dreifach umlauffrequenten Gegenlaufkomponente mit einer entsprechenden Referenzgröße, die im Neu- oder Normalzustand der Maschine ermittelt wurde, läßt sich somit mit einer bisher nicht gekannten Deutlichkeit frühzeitig feststellen, ob sich ein Riß in der Welle gebildet hat und in welchem Maße sich ein gebildeter Riß verändert. Das erfindungsgemäße Verfahren verbessert damit in erheblichem Maße die Auflösung des sehr komplexen Inhalts der gemessenen Signale im Hinblick auf die Früherkennung von Wellenrissen.

Das erfindungsgemäße Verfahren eignet sich vor allem für die kontinuierliche Überwachung des Zustands der Wellen von Kraftwerksmaschinen, wie Turbosätzen, Generatoren, Kühlwasserpumpen und dergleichen, die über längere Zeiträume ohne Unterbrechung kontinuierlich mit der gleichen Drehzahl betrieben werden. Hierbei liegt häufig die Betriebsdrehzahl im überkritischen Drehzahlbereich, in dem der rißbedingte Schwingungsanteil vor allem hinsichtlich der doppelt und dreifach umlauffrequenten Schwingungen sehr klein und daher schwer zu erkennen ist. Um diesen Nachteil zu beseitigen ist nach einem weiteren Vorschlag der Erfindung vorgesehen, daß als Schwingungs-aufnehmer Beschleunigungsaufnehmer in einer Rotationsebene und um 90° in Umfangsrichtung gegeneinander versetzt auf der Welle befestigt werden, wobei die Signale der Beschleunigungsaufnehmer über eine Telemetrieeinrichtung an die Signalverarbeitung übertragen werden. Durch die Anordnung von Beschleunigungsaufnehmern auf der Welle wird die Dynamik der Schwingungsaufnahme erheblich verbessert, so daß auch kleinere Signale als Rißantwort wesentlich besser aufgelöst und erkannt werden können.

Die Erfindung wird nachfolgend anhand zeichnerischer Darstellungen näher beschrieben. Es zeigen
- Figur 1: eine vereinfachte schematische Darstellung einer Welle mit einer Einrichtung zur Durchführung des erfindungsgemäßen Verfahrens,
- Figur 2: ein Diagramm zur Veranschaulichung der vektoriellen Zusammensetzung der aufgenommenen Schwingungen zu einer Wellenschwingungsfigur,
- Figur 3: eine räumliche Darstellung von kreisförmigen und elliptischen Schwingungsfiguren der einfachen, doppelten und dreifachen Drehfrequenz in Abhängigkeit von der Wellendrehzahl und
- Figur 4: ein Diagramm zur Veranschaulichung der vektoriellen Zerlegung einer Schwingungsfigur in Gleichlauf- und Gegenlaufkomponente.

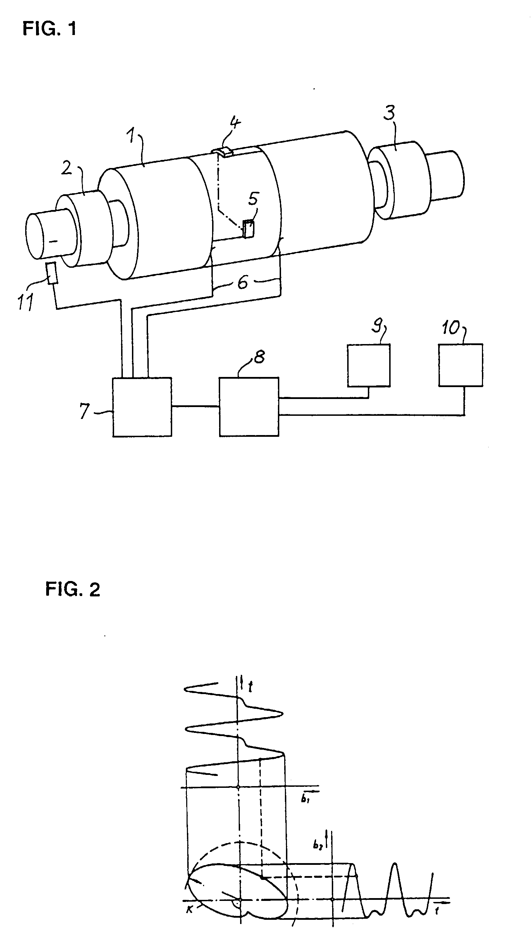

Figur 1 zeigt eine Welle 1, die in Lagern 2, 3 drehbar gelagert ist. An der Welle 1 ist ein Phasengeber 11 angeordnet, der ein Bezugssignal an eine Signalaufbereitung 7 übermittelt. Auf der Welle 1 sind in einer gemeinsamen Rotationsebene in einem Winkelabstand von 90° piezoelektrische Beschleunigungsaufnehmer 4, 5 befestigt. Die Spannungsignale der Beschleunigungsaufnehmer 4, 5 werden über eine Telemetrieeinrichtung 6 einer Signalaufbereitung 7 zugeführt, in der die Signale in einer für die weitere Bearbeitung geeigneten Weise verstärkt und gefiltert werden. Die aufbereiteten Spannungssignale werden zusammen mit dem Signal des Phasengebers 11 einer elektronischen Signalverarbeitung 8 aufgegeben, in der die Signale in der im folgenden näher beschriebenen Weise verarbeitet werden. Die durch die Signalverarbeitung 8 gewonnenen Daten können in einen Speicher 9 eingelesen und mit Hilfe eines Bildschirms 10 dargestellt werden.

In Figur 2 sind beispielhaft Beschleunigungssignale b₁, b₂ über der Zeit t dargestellt, die von den Beschleunigungsaufnehmern 4, 5 bei rotierender Welle 1 aufgrund der vorhandenen Biegeschwingungen der Welle 1 aufgenommen werden. Die Beschleunigungssignale sind den Schwingungen der Welle 1 proportional. Durch vektorielle Addition der Signale b₁ und b₂ läßt sich eine Schwingungsfigur K bilden, die im Drehsinn der Welle 1 umlauffrequent durchfahren wird. Die Schwingungsfigur K beschreibt somit die in einem bestimmten Betriebszustand von dem Wellenmittelpunkt durchlaufene kinetische Wellenbahn.

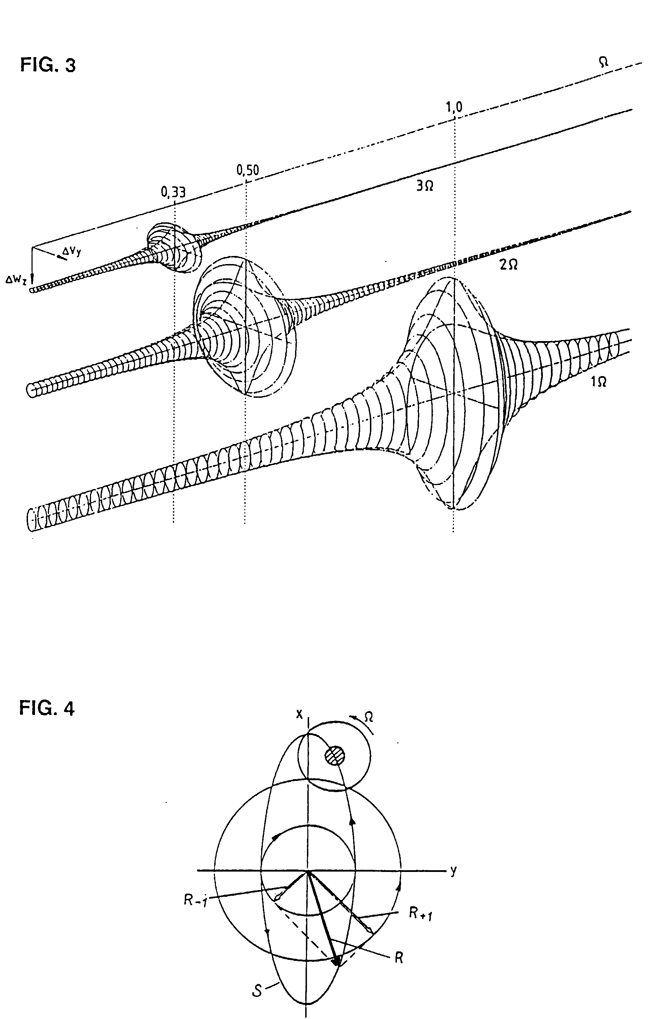

Vergleichbare Schwingungsfiguren lassen sich auch von den harmonischen Schwingungsanteilen der jeweils gemessenen Schwingung der Welle bilden. In dem Diagramm gemäß Figur 3 sind Beispiele für Schwingungsfiguren der einfach, zweifach und dreifach umlauffrequenten harmonischen Schwingungsanteile über der Wellendrehzahl Ω gezeigt. Als Drehzahl Ω ist hierbei jeweils das Verhältnis der absoluten Drehzahl zur kritischen Drehzahl angegeben. Die Darstellung zeigt, daß die umlauffrequente Schwingung bei der kritischen Drehzahl, die doppelt umlauffrequente Schwingung bei der halben kritischen Drehzahl und die dreifach umlauffrequente Schwingung bei einem Drittel der kritischen Drehzahl ihren größten Ausschlag hat. Liegt der Betriebszustand im überkritischen Bereich, so ergeben sich vor allem für die harmonischen Schwingungen mit doppelter und dreifacher Umlauffrequenz sehr kleine Amplituden und dementsprechend kleine Signale.

Nach dem erfindungsgemäßen Verfahren werden der Darstellung gemäß Figur 3 entsprechende Schwingungsfiguren durch Analyse der bei der Betriebsdrehzahl der Welle aufgenommenen Schwingungssignale gebildet und durch vektorielle Zerlegung in eine Gleichlaufkomponente und eine Gegenlaufkomponente zerlegt. In Figur 4 ist diese vektorielle Zerlegung anhand einer umlauffrequent im Gleichlaufsinn durchfahrenen schlanken Ellipse einer ersten harmonischen Schwingung beispielhaft dargestellt. Die elliptische Schwingungsfigur S entsteht aus der Superposition von gleich- und gegenläufiger Kreisbewegung. Durch vektorielle Zerlegung des die Schwingungsfigur S erzeugenden Vektors R lassen sich die Gleichlaufkomponente R₊₁ und die Gegenlaufkomponente R₋₁ bestimmen. Die Gegenlaufkomponente R₋₁ wird mit einer vergleichbaren Referenzgröße verglichen, die in dem Speicher 9 abgelegt ist und in analoger Weise im Normal- oder Neuzustand der Maschine ermittelt wird. Zeigt sich eine positive Abweichung, so deutet dies auf das Vorhandensein eines Risses in der überwachten Welle hin. Wird ein Riß festgestellt, so kann das Wachsen des Risses an der Zunahme der Gegenlaufkomponente verfolgt werden.

Für die frühzeitige Rißerkennung nach dem erfindungsgemäßen Verfahren ist im allgemeinen in erster Linie die umlauffrequente Gegenlaufkomponente der ersten Harmonischen ein ausreichend deutlicher Indikator, zumal ihre höhere Signalstärke eine bessere Auflösung ermöglicht. Je nach Eigenschwingverhalten der gesamten Rotoranordnung, der die Rißantwort überlagernden Störschwingungen und der vorhandenen Betriebsdrehzahl kann es jedoch zweckmäßig sein, auch das Verhalten der Gegenlaufkomponente der Schwingungsfiguren mit zweifacher und dreifacher Umlauffrequenz zu beobachten, um eine deutlichere Aussage über das Vorhandensein eines Risses zu erhalten.

## Patentansprüche

1. Verfahren zur Früherkennung eines Risses in einer rotierenden Welle (1), insbesondere in einer Welle eines Turbosatzes eines Kraftwerks, bei dem kontinuierlich oder in Zeitabständen mit Hilfe von Schwingungsaufnehmern (4,5) in wenigstens zwei radialen, vorzugsweise zueinander senkrechten Richtungen die Biegeschwingungen der Welle (1) darstellende Signale drehwinkelbezogen aufgenommen und an eine Signalverarbeitung (8) übertragen werden, die aus den Signalen die harmonischen Schwingungsanteile mit einfacher und/oder doppelter und/oder dreifacher Umlauffrequenz ermittelt und durch vektorielle Zusammensetzung dieser Schwingungsanteile umlauffrequente und/oder doppelt umlauffrequente und/oder dreifach umlauffrequente Schwingungsfiguren bildet, **dadurch gekennzeichnet**, daß die umlauffrequenten und/oder doppelt umlauffrequenten und/oder dreifach umlauffrequenten aus den harmonischen Schwingungsanteilen gebildeten Schwingungsfiguren von der Signalverarbeitung (8) vektoriell in eine in der Wellendrehrichtung umlaufende Gleichlaufkomponente und eine entgegen der Wellendrehrichtung richtung umlaufende Gegenlaufkomponente zerlegt werden und daß die Gegenlaufkomponente mit einer entsprechenden, im Neu- oder Normalzustand ermittelten Referenzgröße verglichen wird.

2. Verfahren nach Anspruch 1, dadurch gekennzeichnet, daß als Schwingungsaufnehmer Beschleunigungsaufnehmer (4,5) in einer Rotationsebene und um 90° in Umfangsrichtung gegeneinander versetzt auf der Welle (1) befestigt werden, wobei die Signale der Beschleunigungsaufnehmer (4,5) über eine Telemetrieeinrichtung (6) an die Signalverarbeitung (8) übertragen werden.

## Claims

1. Process for the early detection of a crack in a rotating shaft (1), in particular in a shaft of a turbo set of a power plant, wherein signals representing the bending vibrations of the shaft (1) are picked up with reference to the angle of rotation continuously or at time intervals by means of vibration pick-ups (4, 5) in at least two radial directions, which are preferably perpendicular to one another, and transmitted to a signal processing unit (8), which determines from the signals the harmonic vibration components at once and/or twice and/or three times the rotational frequency and, through vector addition of these vibration components, forms vibration patterns for once and/or twice and/or three times the rotational frequency, characterised in that the vibration patterns for once and/or twice and/or three times the rotational frequency which are formed from the harmonic vibration components are vectorially resolved by the signal processing unit (8) into a co-rotating component, which rotates in the direction of rotation of the shaft, and a counterrotating component, which rotates in the direction opposite the direction of rotation of the shaft, and that the counterrotating component is compared with a corresponding reference quantity which is determined in the new or normal state.

2. Process according to claim 1, characterised in that acceleration pick-ups (4, 5) are secured as vibration pick-ups to the shaft (1) in one plane of rotation and staggered by 90° in the circumferential direction, the signals of the acceleration pick-ups (4, 5) being transmitted to the signal processing unit (8) via a telemetry device (6).

## Revendications

1. Procédé de détection précoce d'une fissure dans un arbre rotatif (1), en particulier dans un arbre d'un turbogénérateur d'une centrale électrique, dans lequel, en continu ou à intervalles de temps, dans au moins deux directions radiales, de préférence perpendiculaires l'une à l'autre, des signaux, représentant les oscillations de flexion de l'arbre (1), sont captés, en fonction de l'angle de rotation, à l'aide de capteurs d'oscillations (4, 5) et sont transmis à un traitement de signaux (8), qui, à partir des signaux, détermine les composantes d'oscillations harmoniques avec fréquence de rotation simple et/ou double et/ou triple et forme, par composition vectorielle de ces composantes d'oscillations, des figures d'oscillations à la fréquence de rotation et/ou à la fréquence de rotation double et/ou à la fréquence de rotation triple, **caractérisé** en ce que les figures d'oscillations à la fréquence de rotation et/ou à la fréquence de rotation double et/ou à la fréquence de rotation triple, formées à partir des composantes d'oscillations harmoniques, sont décomposées par le traitement de signaux (8), de manière vectorielle, en une composante de rotation dans le même sens tournant dans le sens de rotation de l'arbre et une composante de contre-rotation tournant dans le sens contraire au sens de rotation de l'arbre et en ce que la composante de contre-rotation est comparée à une grandeur de référence correspondante, déterminée dans le nouvel état ou état normal.

2. Procédé selon la revendication 1, caractérisé en ce qu'on fixe comme capteur d'oscillations sur l'arbre (1), des capteurs d'accélération (4, 5) dans un plan de rotation et décalés l'un par rapport à l'autre de 90° dans la direction périphérique, les signaux des capteurs d'accélération (4, 5) étant transmis au traitement de signaux (8), par un dispositif de télémétrie (6).
